# FASCICULE DE BREVET EUROPEEN

(11) **EP 1 422 103 B1**
(45) Date de publication et mention de la délivrance du brevet: **31.05.2006**
(21) Numéro de dépôt: 03026390.9
(22) Date de dépôt: 18.11.2003
(51) Int. Cl.: B60N 2/02

(54) **Dispositif de commande des moyens de mise en mouvement d'au moins trois parties d'un siège pour véhicule automobile.**
Vorrichtung zum Steuern der Verstellungsmitteln von mindestens drei Sitzteilen eines Kraftfahrzeugsitzes.
Device for controlling the adjusting means of at least three seat parts of an automotive vehicle seat.

(30) Priorité: 22.11.2002 FR 0214645
(43) Date de publication de la demande: 26.05.2004
(73) Titulaire: DAV, 78180 Montigny le Bretonneux (FR)
(72) Inventeur: Tissot, Jean Marc c/o DAV VSDS, 74106 Annemasse (FR); Lebreton, Etienne c/o DAV VSDS, 74106 Annemasse (FR)
(74) Mandataire: Croonenbroek, Thomas Jakob

(56) Documents cités:
- WO-A-01/74620
- DE-A- 19 946 021
- DE-C- 3 904 771
- GB-A- 2 333 226
- US-A- 3 223 791
- US-A- 4 809 180

## Description

La présente invention concerne un dispositif de commande des moyens de mise en mouvement d'au moins trois parties ou ensembles de parties d'un siège pour véhicule automobile. Plus particulièrement, la présente invention concerne un dispositif de commande des moyens de mise en mouvement d'un siège dont la hauteur et l'avancement peuvent être réglés, dont l'orientation de l'ensemble du dossier peut être réglée et dont la hauteur de l'appui tête et/ou la position du soutien lombaire et/ou la position de l'assise peuvent être réglées.

Le réglage en position des sièges peut être effectué au moyen de commandes électriques ou électroniques.Une commande active directement ou indirectement un moteur qui met une partie, un ensemble de parties ou l'ensemble du siège en mouvement. Plus le nombre de parties pouvant être réglées est important plus le maniement des commandes devient complexe. En particulier, lorsque l'arborescence des commandes devient complexe, l'utilisateur ne sait plus de manière directe à quel réglage il a accès.

La présente invention a pour but de proposer un dispositif de commande des moyens de mise en mouvement d'un siège pour véhicule automobile dont l'utilisation est aisée.

Ce but est atteint au moyen d'un dispositif de commande des moyens de mise en mouvement d'au moins trois parties ou ensembles de parties d'un siège pour véhicule automobile qui selon l'invention, de manière caractéristique, comprend un premier et un second organe de commande mobiles, le premier organe peut être actionné selon au moins un premier mouvement, le second organe de commande peut être actionné selon au moins un premier et un second mouvements, le premier organe commandant les moyens de mise en mouvement de la première partie ou du premier ensemble de parties, le second organe commandant les moyens de mise en mouvement des seconde et troisième parties ou des second et troisième ensembles de parties, le second organe de commande comprenant des moyens de sélection des moyens de mise en mouvement des seconde et troisième parties ou des second et troisième ensembles de parties, les moyens de sélection étant actionnés par le premier mouvement du second organe, les moyens de mise en mouvement sont actionnés par le second mouvement du second organe de commande.

Ainsi, le premier organe de commande peut servir, par exemple, à la commande des moyens de mise en mouvement de l'ensemble du siège, le second organe de commande servant à la commande des différentes parties du siège, ces parties pouvant être facilement sélectionnées puis mises en mouvement.

La disposition des deux organes de commande n'est pas limitée selon l'invention. Ainsi, ces deux organes peuvent être séparés ou superposés l'un sur l'autre. Dans ce cas, le second organe peut être superposé sur le premier organe de commande.

Les moyens de sélection des moyens de mise en mouvement d'une partie spécifique peuvent être activés de diverses manières. En d'autres termes, les mouvements des premier et second organe de commande ne sont pas limités dans le cadre de l'invention. Par exemple, les moyens de sélection peuvent être commandés par rotation du second organe de commande.

Selon un mode de réalisation particulier, le premier organe de commande est mobile en rotation et en translation et contrôle les moyens de mise en mouvement de l'ensemble du siège et les moyens d'orientation de l'ensemble du dossier du siège, le second organe de commande étant mobile en rotation et translation et contrôlant au moins deux moyens de mise en mouvement choisis parmi les moyens de mise en mouvement de l'appui tête, les moyens de mise en mouvement du soutien lombaire et les moyens de mise en mouvement de l'assise du siège.

Selon un mode de réalisation de l'invention, le second organe de commande peut également comprendre des moyens d'indication couplés au moyen de sélection. La présence de ces moyens permet à l'utilisateur de comprendre à quelle partie ou ensemble de parties du siège il a accès.

Ces moyens d'indication peuvent être des moyens kinesthésiques et/ou sonores et/ou visuels. Ainsi, il est possible selon la présente invention d'indiquer la partie ou l'ensemble de parties sélectionné soit en actionnant un moteur qui met la partie ou l'ensemble de parties sélectionnées en vibration soit en faisant apparaître sur le tableau de bord, par exemple, à l'aide d'un schéma ou d'un symbole, soit en faisant retentir un signal sonore, du type voix enregistrée qui énonce la partie ou l'ensemble de parties sélectionné(c).

La présente invention, ses caractéristiques et les divers avantages qu'elle procure apparaîtront mieux à la lecture de la description qui suit d'un exemple particulier de réalisation de la présente invention et qui fait référence aux dessins annexés sur lesquels :
- la figure 1 représente une vue en perspective d'un premier mode de réalisation du dispositif de l'invention.
- la figure 2 représente une vue en perspective d'un second mode de réalisation du dispositif de l'invention.

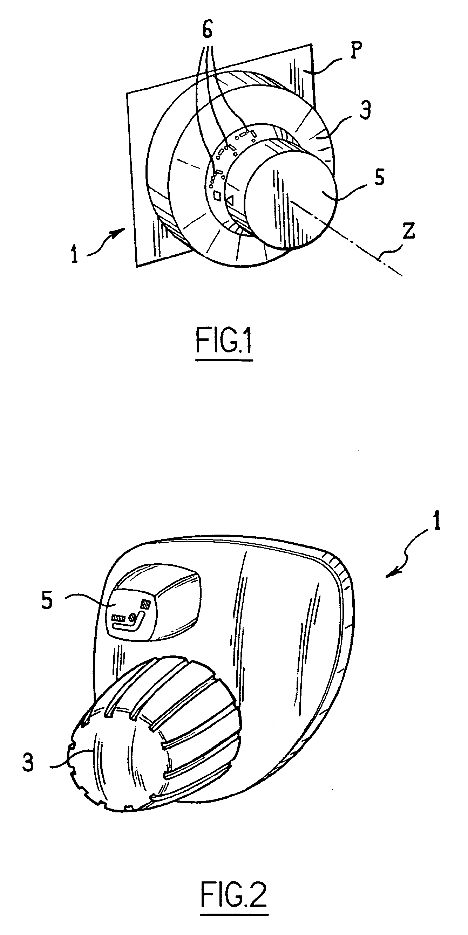

Comme représenté sur la figure 1, le dispositif de l'invention comprend un premier organe de commande 3 et un second organe de commande 5. Les organes de commande 3 et 5 sont mobiles en rotation autour de l'axe Z et mobiles en translation dans le plan P normal à l'axe Z.

La rotation du premier organe de commande 3 autour de l'axe Z commande l'inclinaison de l'assise du siège et sa translation commande le déplacement de l'ensemble du siège. Ces réglages sont dits « principaux ».

Le second organe de commande 5 est dédié aux réglages dits « avancés » qui consistent par exemple, au réglage de la hauteur de l'appui tête, le réglage de la hauteur et l'avancement par rapport au dossier du soutien lombaire et/ou l'orientation et l'allongement de l'assise. Le second organe de commande 5 comprend également des moyens de sélection des moyens de mise en mouvement d'une partie spécifique. Ainsi, dans cet exemple particulier de réalisation, la rotation du second organe de commande 5 autour de l'axe Z permet de sélectionner une partie dont les moyens de mise en mouvement seront commandés par translation de ce second organe de commande 5.

Dans le mode de réalisation particulier représenté, le dispositif de l'invention comporte des moyens d'indication 6 de la partie ou de l'ensemble de parties sélectionné.

Le fonctionnement du mode de réalisation représenté sur la figure 1 va maintenant être expliqué.

Lorsque l'utilisateur veut avoir accès aux réglages dits « principaux », il tourne ou déplace en translation le premier organe de commande 3. Les moyens de mise en mouvement de l'ensemble du siège et/ou de l'ensemble du dossier sont alors actionnés.

Lorsque l'utilisateur veut avoir accès aux réglages dits « avancés », il tourne d'abord le second organe de commande 5. Les moyens de sélection sont alors activés et dans le même temps, les moyens d'indication indiquent quelle partie ou quel ensemble de parties va être commandé(e) par la translation ultérieure du second organe de commande 5.

La translation du second organe de commande 5 dans le plan P commande ensuite les moyens de mise en mouvement de la partie sélectionnée.

Les deux organes étant superposés, leur maniement est simple puisque leur mouvements sont similaires. De plus, cette superposition permet un gain de surface sur le tableau de bord du véhicule.

Il existe 3 possibilités dans le cas où les commandes sont superposées :
- Le mécanisme d'articulation de l'organe des réglages principaux peut être le même que celui qui effectue la modification des réglages avancés. Dans ce cas, il doit exister sur la commande des réglages avancés une position 0 permettant de déplacer l'organe des réglages principaux sans activer les réglages avancés ;
- Le mécanisme d'articulation de l'organe des réglages principaux est dissocié de celui qui effectue la modification des réglages avancés. Dans ce cas, il n'est pas nécessaire d'ajouter une position 0 sur la commande des réglages avancés ;
- De même, si le mécanisme d'articulation de l'organe des réglages principaux est le même que celui qui effectue la modification des réglages avancés, s'il existe une détection de toucher sur la commande des réglages avancés ou sur la commande des réglages avancés ainsi que sur la commande des réglages principaux, il n'est pas nécessaire d'ajouter une position 0 sur cette dernière.

Selon un second mode de réalisation représenté sur la figure 2, les deux organes de commande 3 et 5 sont dissociés et disposés, par exemple, côte à côte. Dans ce cas, les réglages dits « avancés » étant également séparés des réglages dits « principaux », le réglage par l'utilisateur de la position du siège est donc aussi facilité.

La dissociation des réglages dits « principaux » et des réglages dits « avancés » permet une utilisation plus simple. En effet, la Demanderesse a mis en évidence que la plupart du temps, l'utilisateur ne souhaite avoir accès qu'aux réglages dits principaux.

## Revendications

1. Dispositif de commande (1) des moyens de mise en mouvement d'au moins trois parties ou ensembles de parties d'un siège pour véhicule automobile, **caractérisé en ce qu'**il comprend un premier (3) et un second organe (5) de commande mobiles, ledit premier organe peut être actionné selon au moins un premier mouvement, ledit second organe de commande peut être actionné selon au moins un premier et un second mouvements, ledit premier organe (3) commandant lesdits moyens de mise en mouvement de ladite première partie ou dudit premier ensemble de parties, ledit second organe de commande (5) commandant lesdits moyens de mise en mouvement desdites seconde et troisième parties ou desdits second et troisième ensembles de parties, ledit second organe (5) de commande comprenant des moyens de sélection desdits moyens de mise en mouvement desdites seconde et troisième parties ou desdits second et troisième ensembles de parties, lesdits moyens de sélection étant actionnés par ledit premier mouvement dudit second organe, lesdits moyens de mise en mouvement sont actionnés par ledit second mouvement dudit second organe de commande (5).

2. Dispositif de commande selon la revendication 1, **caractérisé en ce que** ledit second organe de commande (5) est superposé sur ledit premier organe de commande (3).

3. Dispositif de commande selon la revendication 1 ou 2, **caractérisé en ce que** lesdits moyens de sélection sont commandés par rotation dudit second organe de commande.

4. Dispositif de commande selon l'une quelconque des revendications 1 à 3, **caractérisé en ce que** ledit premier organe de commande (3) est mobile en rotation et en translation et commande des moyens de mise en mouvement de l'ensemble du siège et des moyens d'orientation de l'ensemble du dossier du siège, ledit second organe de commande (5) est mobile en rotation et translation et commande au moins deux moyens de mise en mouvement choisis parmi les moyens de mise en mouvement de l'appui tête, les moyens de mise en mouvement du soutien lombaire et les moyens de mise en mouvement de l'assise du siège.

5. Dispositif de commande selon l'une quelconque des revendications 1 à 4, **caractérisé en ce que** ledit second organe de commande (5) comprend des moyens d'indication couplés audits moyens de sélection.

6. Dispositif de commande selon la revendication 5, **caractérisé en ce que** lesdits moyens d'indication sont des moyens kinesthésiques et/ou visuels et/ou sonores.

## Claims

1. Device (1) for controlling means of moving at least three parts or sets of parts of a motor vehicle seat, **characterised in that** it comprises a first (3) and a second (5) mobile control member, said first member can be activated according to at least a first movement, said second control member can be activated according to at least a first and a second movement, said first member (3) controlling said means of moving said first part or said first set of parts, said second control member (5) controlling said means of moving said second and third parts or said second and third sets of parts, said second control member (5) comprising means of selecting said means of moving said second and third parts or said second and third sets of parts, said selection means being activated by said first movement of said second member, said moving means are activated by said second movement of said second control member (5).

2. Control device according to Claim 1, **characterised in that** said second control member (5) is superposed on said first control member (3).

3. Control device according to Claim 1 or 2, **characterised in that** said selection means are controlled by rotation of said second control member.

4. Control device according to any one of Claims 1 to 3, **characterised in that** said first control member (3) is mobile in rotation and in translation and controls means of moving the entire seat and means of orienting the entire seat back, said second control member (5) is mobile in rotation and translation and controls at least two moving means chosen from amongst means of moving the headrest, means of moving the lumbar support and means of moving the seat cushion.

5. Control device according to any one of Claims 1 to 4, **characterised in that** said second control member (5) comprises indication means coupled to said selection means.

6. Control device according to Claim 5, **characterised in that** said indication means are kinaesthetic and/or visual and/or audible means.

## Patentansprüche

1. Vorrichtung (1) zum Steuern der Verstellmittel von zumindest drei Teilen bzw. Einheiten von Teilen eines Kraftfahrzeugsitzes, **dadurch gekennzeichnet, dass** sie ein erstes (3) und ein zweites bewegliches Steuerglied (5) enthält, wobei das erste Glied zumindest mit einer ersten Bewegung betätigbar ist, das zweite Steuerglied zumindest mit einer ersten Bewegung und einer zweiten Bewegung betätigbar ist, wobei das erste Glied (3) die Verstellmittel des ersten Teils bzw. der ersten Einheit von Teilen steuert, das zweite Steuerglied (5) die Verstellmittel des zweiten und des dritten Teils bzw. der zweiten und der dritten Einheit von Teilen steuert, das zweite Steuerglied (5) Mittel zum Auswählen der Verstellmittel des zweiten und des dritten Teils bzw. der zweiten und der dritten Einheit von Teilen enthält, wobei die Wählmittel über die erste Bewegung des zweiten Glieds betätigt werden und die Verstellmittel über die zweite Bewegung des zweiten Steuerglieds (5) betätigt werden.

2. Steuervorrichtung nach Anspruch 1, **dadurch gekennzeichnet, dass** das zweite Steuerglied (5) dem ersten Steuerglied (3) überlagert ist.

3. Steuervorrichtung nach Anspruch 1 oder 2, **dadurch gekennzeichnet, dass** die Wählmittel durch Drehung des zweiten Steuerglieds gesteuert werden.

4. Steuervorrichtung nach einem der Ansprüche 1 bis 3, **dadurch gekennzeichnet, dass** das erste Steuerglied (3) drehbar und verschiebbar ist und Verstellmittel der Sitzeinheit und Mittel zum Ausrichten der Rückenlehneneinheit des Sitzes steuert, wobei das zweite Steuerglied (5) drehbar und verschiebbar ist und zumindest zwei Verstellmittel steuert, die unter den Mitteln zum Verstellen der Kopfstütze, den Mitteln zum Verstellen der Lendenstütze und den Mitteln zum Verstellen der Sitzfläche des Sitzes ausgewählt sind.

5. Steuervorrichtung nach einem der Ansprüche 1 bis 4, **dadurch gekennzeichnet, dass** das zweite Steuerglied (5) Anzeigemittel enthält, die mit den Wählmitteln gekoppelt sind.

6. Steuervorrichtung nach Anspruch 5, **dadurch gekennzeichnet, dass** die Anzeigemittel kinästhetische und/oder visuelle und/oder akustische Mittel sind.
